# EUROPÄISCHE PATENTSCHRIFT

(11) **EP 3 639 947 B1**
(45) Veröffentlichungstag und Bekanntmachung des Hinweises auf die Patenterteilung: **24.03.2021**
(21) Anmeldenummer: 19198953.2
(22) Anmeldetag: 23.09.2019
(51) Int. Cl.: B21J 5/12, B21J 7/14, B21J 9/02, B21J 13/02, B21K 5/10, B23B 51/00, B23P 15/32

(54) **VERFAHREN UND VORRICHTUNG ZUR HERSTELLUNG EINES VERBINDUNGSELEMENTES**
METHOD AND DEVICE FOR PRODUCING A CONNECTING ELEMENT
PROCÉDÉ ET DISPOSITIF DE FABRICATION D'UN ÉLÉMENT DE RACCORDEMENT

(30) Priorität: 19.10.2018 DE 102018126093
(43) Veröffentlichungstag der Anmeldung: 22.04.2020
(73) Patentinhaber: Mac Panther GmbH, 28199 Bremen (DE)
(72) Erfinder: Kleine, Michael, 28832 Achim (DE); Kleine, Dr. Andreas, 28199 Bremen (DE)
(74) Vertreter: Eisenführ Speiser

(56) Entgegenhaltungen:
- EP-A1- 2 839 900
- DE-A1-102010 018 791
- DE-A1-102010 028 474
- GB-A- 631 438
- US-A- 2 405 298

## Beschreibung

Die Erfindung betrifft ein Verfahren zur Herstellung eines mit einer Endfläche versehenen Stangen- oder rohrförmigen Verbindungselementes aus einem Verbindungselementhalbzeug aus Metall, insbesondere eines axial beweglich in einer Werkzeugaufnahme eines Bohrhammers befestigten Einsteckendes eines Bohrers oder Meißels. Die Erfindung betrifft weiterhin ein solches Verbindungselement und eine Vorrichtung zur Herstellung eines Verbindungselementes aus einem Verbindungselementhalbzeug aus Metall, insbesondere eines axial beweglich in einer Werkzeugaufnahme eines Bohrhammers befestigten Einsteckendes eines Bohrers oder Meißels.

Verfahren und Vorrichtungen der eingangs genannten Art sind aus dem Stand der Technik bekannt. Beispielsweise zeigen die EP 2 458 131 A2, die EP 2 361 702 A1, die EP 2 839 900 A1, die DE 10 2010 018791 A1, die DE 10 2010 028474 A1, die US 2 405 298 A und die GB 631 438 A Verfahren und Vorrichtungen der eingangs genannten Art

Die EP 2 839 900 A1 bildet die Basis für den Oberbegriff des Anspruchs 5. Diese Druckschrift zeigt auch ein Verfahren wobei mindestens eine Drehmitnahmefläche durch radiales Zustellen von mindestens einem beweglichen Umformkörper eingeprägt wird.

Eine Aufgabe der vorliegenden Erfindung ist es, Verfahren und/oder Vorrichtungen der eingangs genannten Art zu verbessern.

Diese Aufgabe wird durch den Gegenstand des unabhängigen Verfahrensanspruchs 1 bzw. durch den Gegenstand des unabhängigen Vorrichtungsanspruchs 5 gelöst.

Die vorliegende Erfindung umfasst die Erkenntnis, dass die aus dem eingangs genannten Stand der Technik bekannten Verfahren zur Einformung von Drehmitnahmeflächen und Verriegelungsnuten in Verbindungselementhalbzeuge insbesondere bei Bohrern immer mehrere Matrizen zur Durchführung des Verfahrens benötigen. Dies bedeutet, dass zur Durchführung der aus dem vorgenannten Stand der Technik bekannten Verfahren teure Mehrstufenpressen benötigen werden. Hierdurch entstehen erhöhte Kosten bei der Fertigung der in Rede stehenden Verbindungselemente. Auch sind derartige Mehrstufenpressen bezüglich der von ihnen bearbeitbaren Teilelängen und -durchmesser eng begrenzt, sodass viele Bohrer- oder Meißelabmessungen auf ihnen nicht gefertigt werden können.

Darüber hinaus hat die Erfindung auch erkannt, dass sich bei den eingangs genannten Verfahren und Vorrichtungen des Standes der Technik das Verbindungselementhalbzeug bzw. Werkstück beim Transport von einer Matrize zur nächsten Matrize leicht verdrehen kann. Dies führt beim Einschieben in die Folgematrize zu einem Bruch mit nachfolgend langem Maschinenstillstand und vor allem zur Zerstörung der in den Maschinen verwendeten Umformwerkzeuge. Insbesondere diese Nachteile werden insbesondere durch die erfindungsgemäße Herstellung der Drehmitnahmeflächen und der Verriegelungsnuten in nur einer einzigen Matrize vermieden.

Eine bevorzugte Ausführungsform der Erfindung zeichnet sich dadurch aus, dass die Verriegelungssenke als Verriegelungsnut ausgebildet ist. Mittels einer Verriegelungsnut kann ein zusätzliches Drehmoment übertragen werden.

Eine bevorzugte Ausführungsform der Erfindung zeichnet sich dadurch aus, dass das Einprägen der mindestens einen oder mehreren Verriegelungssenken in das Verbindungselementhalbzeug durch radiales Zustellen von einem oder mehreren in der Matrize beweglichen Umformkörpern anschließend an das Einformen und/oder während des Einformens der einen oder mehreren Drehmitnahmeflächen erfolgt. Durch das Einformen der Drehmitnahmeflächen, insbesondere als Drehmitnahmenuten wird das Verbindungselementhalbzeug in der Matrize verdrehsicherer positioniert als wenn zunächst die Verriegelungssenken eingeformt werden. So ist gewährleistet, dass die Matrize nicht durch verdrehte Teile beschädigt wird.

Eine bevorzugte Ausführungsform der Erfindung zeichnet sich dadurch aus, dass bei einem rohrförmigen, einen Rohrinnenquerschnitt aufweisendem Verbindungselementhalbzeug im Bereich der mindestens einen geplanten Drehmitnahmefläche und der mindestens einen geplanten Verriegelungssenke der Rohrinnenquerschnitt durch das Einbringen der mindestens einen geplanten Drehmitnahmefläche und/oder der mindestens einen geplanten Verriegelungsnut verkleinert oder geschlossen wird. Vorzugsweise wird der Rohrinnenquerschnitt durch vorheriges Einführen eines entlang seiner Längsachse mit Querschnittsänderungen profilierten Innenstiftes in das Verbindungselementhalbzeug reduziert oder geschlossen, wobei der Innenstift vorzugsweise eine größere Festigkeit als das Rohr aufweist.

Die Erfindung hat in diesem Zusammenhang erkannt, dass rohrförmige, einen Rohrinnenhohlraum mit einem Rohrinnenquerschnitt aufweisende Verbindungselemente vor allem zur Herstellung von Saugbohrern verwendet werden. Derartige Saugbohrer werden bevorzugt aus massivem Rundstahl gefertigt. Der einen Rohrinnenquerschnitt aufweisende Rohrinnenhohlraum, der die eigentliche Saugbohrung bildet, wird bevorzugt durch Tieflochbohren erzeugt. Die Erfindung hat in diesem Zusammenhang erkannt, dass dieses Tieflochbohren nicht nur sehr teuer ist, sondern vor allem wegen häufig auftretender Riefenbildung am Bohrungsgrund auch qualitativ nachteilig ist. Es kommt dadurch häufig zu Ausschuss, so dass insgesamt der Preis derartig hergestellter Saugbohrer sehr hoch ist, was der allgemeinen Verbreitung derartiger Saugbohrer entgegensteht. Durch die erfindungsgemäße Verwendung eines rohrförmigen Verbindungselementhalbzeugs, also beispielsweise eines bevorzugt dickwandigen Rohrabschnitts, werden diese Nachteile erfindungsgemäß vermieden. Insbesondere wird bei dieser Ausführungsform der Erfindung bevorzugt das Hinterende des Bohrers geschlossen, so dass die Schlagenergie auf dieses massive Hinterende übertragen werden kann und zugleich die Absaugung bei einem gemäß dieser Ausführungsform hergestellten Saugbohrer weiterhin - wie auch bei aus dem Stand der Technik bekannten Saugbohrern - vor dem Einsteckende erfolgt.

Eine bevorzugte Ausführungsform der Erfindung zeichnet sich dadurch aus, dass die Matrize in Längsrichtung mindestens einmal geteilt ist und die Matrizenhälften bzw. -teile beim Auswerfen geringfügig im Verhältnis zu einem Durchmesser des Verbindungselements beabstandet werden. Die Vorteile dieser Ausführungsform liegen insbesondere darin, dass durch die leichte, d.h. im Verhältnis zu einem Durchmesser des Verbindungselementes geringfügige Beabstandung der durch die Teilung der Matrize in Längsrichtung gebildeten Matrizenhälften die beim Ausschieben des Verbindungselementes aus der Matrize benötigen Kräfte erheblich reduziert werden.

Eine bevorzugte Ausführungsform der erfindungsgemäßen Herstellungsvorrichtung zeichnet sich dadurch aus, dass außerhalb der Matrize und annähernd rechtwinklig zu der Matrizenlängsöffnung mindestens ein Keil angeordnet ist, der zum Einpressen der Verriegelungsnuten und/oder Drehmitnahmeflächen auf den mindestens einen radial beweglichen Umformkörper drückt. Ein Vorteil dieser bevorzugten Anordnung der Keile liegt insbesondere darin, dass dadurch eine besonders kompakte Bauweise der erfindungsgemäßen Vorrichtung ermöglicht wird.

Eine weitere bevorzugte Ausführungsform der erfindungsgemäßen Vorrichtung zeichnet sich dadurch aus, dass der mindestens eine Keil als Innennockenflächen in einer konzentrisch zur Matrize drehbar gelagerten Hülse angearbeitet sind und durch Verdrehung der Hülse die Kraft zum Einformen der Verriegelungsnuten und/oder Drehmitnahmeflächen auf den mindestens einen radial beweglichen Umformkörper aufgebracht wird. Ein Vorteil dieser bevorzugten Ausführungsform der erfindungsgemäßen Vorrichtung liegt insbesondere darin, dass durch diese Anordnung der konzentrisch zur Matrize drehbar gelagerten Hülse eine besonders kompakte Bauweise der erfindungsgemäßen Vorrichtung ermöglicht wird.

Weitere bevorzugte Ausführungsformen der Erfindung sind in den Unteransprüchen angegeben.

Im Folgenden werden bevorzugte Ausführungsformen der Erfindung anhand der Zeichnungen beschrieben. Gleiche oder funktionsgleiche Teile oder Verfahrensschritte sind mit denselben Bezugszeichen bezeichnet. Die Zeichnungen zeigen:
- Figur 1: zeigt ein Verbindungselementhalbzeug zur Verwendung in den erfindungsgemäßen Verfahren bzw. Vorrichtungen in einer perspektivischen Ansicht und in einer Seitenansicht;
- Figur 2: zeigt eine perspektivische Ansicht eines Zwischenprodukts nach einem ersten Arbeitsschritt einer ersten Ausführungsform eines erfindungsgemäßen Verfahrens;
- Figur 3: zeigt eine perspektivische Ansicht eines Verbindungselementes nach einem zweiten Arbeitsschritt einer ersten Ausführungsform eines erfindungsgemäßen Verfahrens;
- Figur 4: zeigt die Detailansicht A der Figur 2;
- Figur 5: zeigt eine teilweise Draufsicht auf das Zwischenprodukt der Figur 2;
- Figur 6: zeigt eine Schnittansicht gemäß der in Figur 5 dargestellten Schnittlinie C-C;
- Figur 7: zeigt eine Schnittansicht gemäß der in Figur 5 dargestellten Schnittlinie B-B;
- Figur 8: zeigt die Detailansicht A des Verbindungselementes gemäß Figur 3;
- Figur 9: zeigt eine teilweise Draufsicht auf das Verbindungselement gemäß Figur 3;
- Figur 10: zeigt eine Schnittansicht gemäß der in Figur 9 dargestellten Schnittlinie B-B;
- Figur 11: zeigt eine Schnittansicht gemäß der in Figur 9 dargestellten Schnittlinie C-C;
- Figur 12: zeigt eine Ausführungsform einer erfindungsgemäßen Vorrichtung zur Fertigung eines Verbindungselementes aus einem Verbindungselementhalbzeug; und
- Figur 13: zeigt einen Schnitt durch die Vorrichtung der Figur 12.

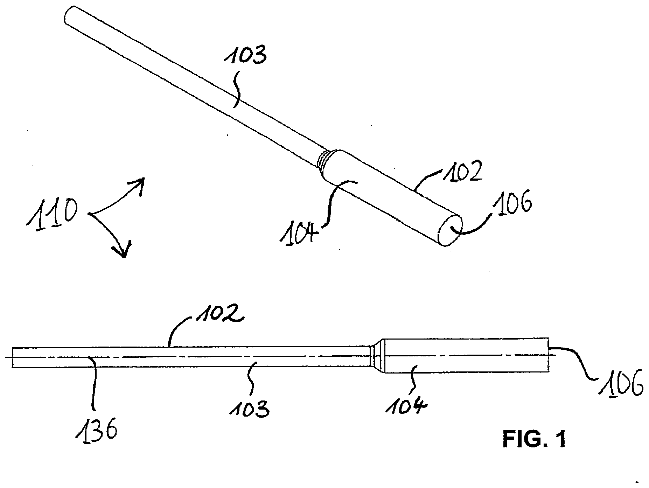

Figur 1 zeigt ein Verbindungselementhalbzeug 102 zur Verwendung in den erfindungsgemäßen Verfahren bzw. Vorrichtungen in einer perspektivischen Ansicht und in einer Seitenansicht. Das in Figur 1 dargestellte Verbindungselementhalbzeug 102 besteht aus Metall. Das Verbindungelementhalbzeug 102 ist insgesamt als zylinderförmige Stange ausgebildet. Alternativ, jedoch nicht dargestellt, kann das Verbindungselementhalbzeug 102 auch als zylinderförmiges Rohr ausgebildet sein. Das Halbzeug 102 weist einen in der Figur 1 jeweils links dargestellten Abschnitt 103 mit geringerem Durchmesser auf und einen in der Figur 1 jeweils rechts dargestellten Abschnitt 104 mit im Vergleich zu dem Durchmesser des Abschnittes 103 etwa doppelt so großen Durchmesser auf, wobei es für die vorliegende Erfindung auf die Durchmesserunterschiede zwischen den Abschnitten 103 und 104 nicht ankommt. Weiterhin weist das Halbzeug 102 an seinem dem dünneren Abschnitt 103 abgewandten Ende eine Endfläche 106 auf. Figur 1 zeigt den Rohzustand 110 des Halbzeugs 102 vor dem Einprägen einer Längsnut oder einer Drehmitnahmefläche im Abschnitt 104. Die in Figur 1 in der Seitenansicht des Halbzeugs 102 zur erkennende gestrichelte Linie 136 zeigt die Längsachse des Halbzeugs 102.

Das Verbindungselementhalbzeug 102 der Figur 1 kann auch als rohrförmiges Halbzeug 102 ausgebildet sein. In einem solchen Fall findet sich in dem Halbzeug 102 ein konzentrisch zur Längsachse 136 verlaufender Rohrinnenhohlraum mit einem gewünschten Rohrinnenquerschnitt (nicht dargestellt). Derartige Halbzeuge finden beispielsweise bei Saugbohrern Verwendung.

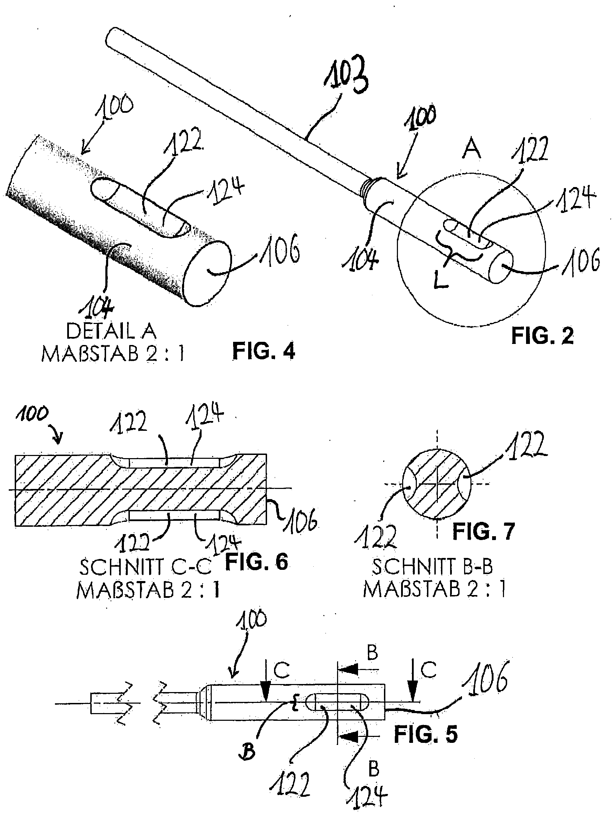

Figur 2 zeigt eine perspektivische Ansicht eines Zwischenprodukts 100 nach einem ersten Arbeitsschritt einer ersten Ausführungsform eines erfindungsgemäßen Verfahrens. Figur 2 zeigt im Bereich des Abschnitts 104 ein aus dem Verbindungselementhalbzeug 102 der Figur 1 hergestelltes, mit einer Endfläche 106 versehenes stangenförmiges Zwischenprodukt 100 aus Metall. Die in Figur 2 dargestellte Ausführungsform des erfindungsgemäßen Zwischenproduktes 100 stellt ein axial beweglich in einer Werkzeugaufnahme eines Bohrhammers befestigtes Einsteckende eines Bohrers oder Meißels dar. Das Zwischenprodukt 100, welches mit Bezug auf die Figuren 4-7 noch genauer beschrieben wird, weist zwei sich auf dem Umfang des Abschnitts 104 gegenüberliegende, beidseitig geschlossene Längsnuten 122 auf. Die Längsnuten 122 weisen eine geplante Länge L auf. Die Längsnuten 122 dienen in der dargestellten Ausführungsform als Verriegelungsnuten 124.

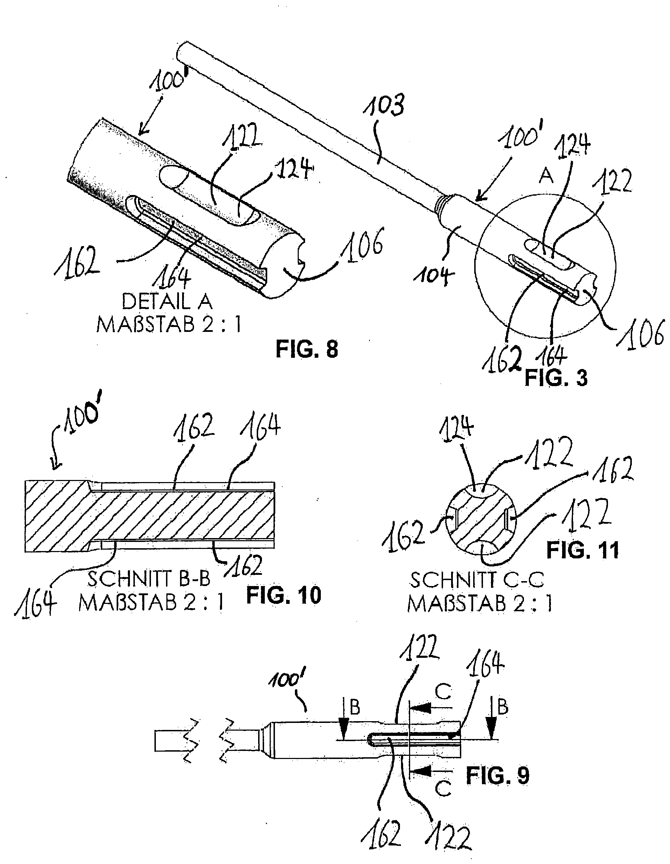

Figur 3 zeigt eine perspektivische Ansicht einer Ausführungsform eines Verbindungselementes 100' nach einem zweiten Arbeitsschritt einer ersten Ausführungsform eines erfindungsgemäßen Verfahrens. Die in Figur 3 dargestellte Ausführungsform eines Verbindungselementes 100' wird unten mit Bezug auf die Figuren 8-11 genauer beschrieben. Der wesentliche Unterschied des Verbindungselementes 100' zum Zwischenprodukt 100 der Figuren 2 und 4-7 ist, dass zwei - von den Längsnuten 122 in einem rechten Winkel entlang der Umfangsrichtung des Umfangs des Abschnitts 104 beabstandete - sich ebenfalls auf dem Umfang des Abschnitts 104 gegenüberliegende, zur Endfläche 106 hin offene, in der dargestellten Ausführungsform der Figuren 3 und 8-11 als im Wesentlichen U-förmige Nuten 162 ausgebildete Drehmitnahmeflächen 164 eingeformt sind.

Figur 4 zeigt die Detailansicht A der Figur 2.

Figur 5 zeigt eine Draufsicht auf das Zwischenprodukt 100 der Figur 2.

Figur 6 zeigt eine Schnittansicht durch das Zwischenprodukt 100 gemäß der in Figur 5 dargestellten Schnittlinie C-C.

Figur 7 zeigt eine Schnittansicht durch das Zwischenprodukt 100 gemäß der in Figur 5 dargestellten Schnittlinie B-B.

Figur 8 zeigt die Detailansicht Ader Ausführungsform des Verbindungselementes 100' gemäß Figur 3.

Figur 9 zeigt eine teilweise Draufsicht auf das Verbindungselement 100' der Ausführungsform gemäß Figur 3.

Figur 10 zeigt eine Schnittansicht durch das Verbindungselement 100' gemäß der in Figur 9 dargestellten Schnittlinie B-B.

Figur 11 zeigt eine Schnittansicht durch das Verbindungselement 100' gemäß der in Figur 9 dargestellten Schnittlinie C-C.

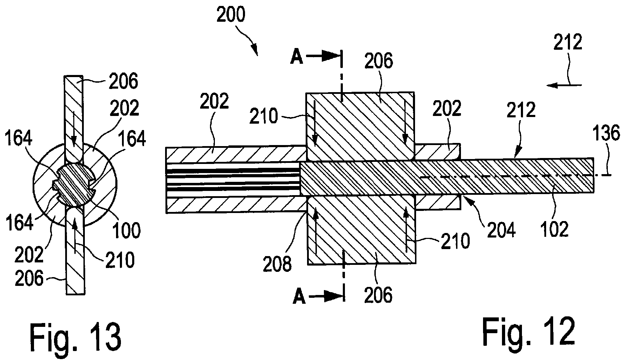

Figur 12 zeigt eine Ausführungsform einer erfindungsgemäßen Vorrichtung 200 zur Fertigung eines Verbindungselementes 100' gemäß den Figuren 3 und 8-11 aus einem Verbindungselementhalbzeug 102 gemäß der Figur 1. Figur 13 zeigt einen Schnitt durch die Vorrichtung 200 der Figur 12.

Zur Herstellung des Verbindungselementes 100' aus dem Verbindungselementhalbzeug 102 weist die Vorrichtung 200 eine Matrize 202 mit einer Matrizenlängsöffnung zur Einformung von drei Drehmitnahmeflächen 164 in ein Verbindungselementhalbzeug 102 auf. Bei der in Figur 12 dargestellten Vorrichtung 200 zur Herstellung eines Verbindungselementes 100' aus einem Verbindungselementhalbzeug 102 handelt es sich beispielsweise um eine Vorrichtung 200 zur Herstellung eines axial beweglich in einer Werkzeugaufnahme eines Bohrhammers befestigten Einsteckendes als Teil eines Bohrers oder Meißels aus Metall. Weiterhin weist die Vorrichtung 200 zwei sich gegenüberliegende, radial bewegliche Umformkörper 206 auf, die in Aussparungen 208 derselben Matrize 202 angeordnet sind. Mittels der Umformkörper 206, die gemäß den Pfeilen 210 radial auf die Umfangsoberfläche des Verbindungselementhalbzeugs 102 zugestellt werden können, können durch Einprägen zwei sich gegenüberliegende Verriegelungssenken 124 in das Verbindungselementhalbzeug 102 eingeformt bzw. eingeprägt werden. Hierzu sind die der Umfangsoberfläche 212 des Verbindungselementhalbzeugs 102 zugewandten Enden der Umformkörper 206 abgerundet, wie sich beispielsweise unmittelbar aus der zugehörigen Schnittansicht gemäß der Schnittlinie A-A durch die Figur 12 aus der Figur 13 ergibt. Die Figur 13 zeigt insoweit ein aus dem Verbindungselementhalbzeug 102 bereits teilweise hergestelltes Zwischenprodukt, da in dem Schnitt der Figur 13 bereits die durch den in der Figur 12 rechts von den Umformkörper 206 liegenden Teil der Matrize 202 eingeformten Drehmitnahmeflächen 164 zu erkennen sind. Wie sich aus Figur 13 ergibt, weist das dargestellte Zwischenprodukt 100 drei Drehmitnahmeflächen 164 auf im Gegensatz zu den in dem Verbindungselement 100' der Figur 3 dargestellten zwei Drehmitnahmeflächen 164. Dieser Unterschied spielt jedoch für die vorliegende Erfindung keine Rolle. Vielmehr handelt es sich nur um eine reine Anpassung an die Bedürfnisse des zu bestückenden Werkzeugs, wie beispielsweise des zu bestückenden Bohrhammers.

Mit Hilfe der Vorrichtung 200 kann das erfindungsgemäße Verfahren zur Herstellung eines mit einer Endfläche versehenen stangen- oder rohrförmigen Verbindungselements 100' aus einem Verbindungselementhalbzeug 102 aus Metall, insbesondere eines axial beweglich in einer Werkzeugaufnahme eines Bohrhammers befestigten Einsteckendes eines Bohrers oder Meißels, durchgeführt werden. Hierzu wird bei einer ersten Ausführungsform des erfindungsgemäßen Verfahrens ein Verbindungselementhalbzeug 102 zur Verfügung gestellt. Anschließend werden die in Figur 10 zu erkennenden drei Mitnahmeflächen 164 durch ein axiales Einführen des Verbindungselementhalbzeugs 102 unter Kraft in Richtung der Längsachse 136 des Verbindungselementhalbzeugs in die Matrizenlängsöffnung 204 der Matrize 202 in das Verbindungselementhalbzeug 102 eingeformt. Hierzu wird gemäß Figur 12 das Verbindungselementhalbzeug in Richtung des Pfeils 212 in die Matrize 202 eingeschoben. Anschließend und/oder während des Einformens der drei Drehmitnahmeflächen 164 werden zwei Verriegelungssenken 124 durch radiales Zustellen der beiden in derselben Matrize 202 radial gemäß den Pfeilen 210 beweglichen Umformkörper 206 in das Verbindungselementhalbzeug 102 bzw. in das Zwischenprodukt 100 eingeprägt.

Bei einer weiteren Ausführungsform des erfindungsgemäßen Verfahrens kann bei einem rohrförmigen, einen Rohrinnenhohlraum mit einem Rohrinnenquerschnitt aufweisenden Verbindungselementhalbzeug 102 im Bereich der mindestens einen geplanten Drehmitnahmefläche 164 und der mindestens einen geplanten Verriegelungssenke 124 der Rohrinnenquerschnitt durch das Einbringen der Drehmitnahmefläche 164 und/oder der Verriegelungssenke 124 verkleinert oder geschlossen werden, wobei bevorzugt der Rohrinnenquerschnitt durch vorheriges Einführen eines entlang seiner Längsachse mit Querschnittsänderungen profilierten Innenstiftes in das Verbindungselementhalbzeug 102 reduziert und/oder geschlossen wird, wobei der Innenstift vorzugsweise eine größere Festigkeit aufweist als das Verbindungselementhalbzeug 102.

Bei einer weiteren nicht dargestellten Ausführungsform des erfindungsgemäßen Verfahrens kann die Matrize 202 in Längsrichtung mindestens einmal geteilt sein, wobei die Matrizenhälften bzw. -teile beim Auswerfen des fertigen Verbindungselementes 100' aus der Matrize 202 geringfügig im Verhältnis zu einem Durchmesser des Verbindungselementes 100' beabstandet werden.

Bei einer weiteren nicht dargestellten Ausführungsform der erfindungsgemäßen Vorrichtung 200 können außerhalb der Matrize 202 und annähernd rechtwinklig zu der Matrizenlängsöffnung 204 mindestens ein oder mehrere Keile angeordnet sein, die zum Einpressen der Verriegelungssenken 124 in das Verbindungselementhalbzeug 102 auf den mindestens einen radial beweglichen Umformkörper 206 drücken. Bei dieser nicht dargestellten Ausführungsform kann der mindestens eine Keil als Innennockenfläche in einer konzentrisch zur Matrize drehbar gelagerten Hülse angearbeitet sein, wobei durch Verdrehung der Hülse die Kraft zum Einformen der Verriegelungssenken 124 auf den mindestens einen radial beweglichen Umformkörper 206 aufgebracht wird.

## Patentansprüche

1. Verfahren zur Herstellung eines mit einer Endfläche (106) versehenen stangen- oder rohrförmigen Verbindungselements (100') aus einem Verbindungselementhalbzeug (102) aus Metall, insbesondere eines axialbeweglich in einer Werkzeugaufnahme eines Bohrhammers befestigten Einsteckendes eines Bohrers oder Meißels, wobei ein Verbindungselementhalbzeug (102) zur Verfügung gestellt wird, wobei mindestens eine Drehmitnahmefläche (162, 164) durch ein axiales Einführen des Verbindungselementhalbzeugs (102) unter Kraft in Richtung der Längsachse (136) des Verbindungselementhalbzeugs (102) in eine Matrizenlängsöffnung (204) einer Matrize (202) in das Verbindungselementhalbzeug (102) eingeformt wird, und mindestens eine Verriegelungssenke (122, 124) durch radiales Zustellen von mindestens einem in derselben Matrize (202) beweglichen Umformkörper (206) in das Verbindungselementhalbzeug (102) eingeprägt wird.

2. Verfahren nach Anspruch 1,
**dadurch gekennzeichnet, dass** das Einprägen der mindestens einen Verriegelungssenke (122, 124) durch radiales Zustellen von mindestens einem in der Matrize (202) beweglichen Umformkörper (206) anschließend an das Einformen und/oder während des Einformens der mindestens einen Drehmitnahmefläche (162, 164) erfolgt.

3. Verfahren nach einem der vorstehenden Ansprüche,
**dadurch gekennzeichnet, dass** bei einem rohrförmigen, einen Rohrinnenhohlraum mit einem Rohrinnenquerschnitt aufweisendem Verbindungselementhalbzeug (102) im Bereich der mindestens einen geplanten Drehmitnahmefläche (162, 164) und der mindestens einen geplanten Verriegelungssenke (122, 124) der Rohrinnenquerschnitt durch das Einbringen der Drehmitnahmefläche (162, 164) und/oder der Verriegelungssenke (122, 124) verkleinert oder geschlossen wird, vorzugsweise wird der Rohrinnenquerschnitt durch vorheriges Einführen eines entlang seiner Längsachse (136) mit Querschnittsänderungen profilierten Innenstiftes in das Verbindungselementhalbzeug (102) reduziert oder geschlossen, wobei der Innenstift vorzugsweise eine größere Festigkeit als das Verbindungselementhalbzeug (102) aufweist.

4. Verfahren nach einem der vorstehenden Ansprüche,
**dadurch gekennzeichnet, dass** die Matrize (202) in Längsrichtung mindestens einmal geteilt ist und die Matrizenhälften bzw. -teile beim Auswerfen geringfügig im Verhältnis zu einem Durchmesser des Verbindungselementes (100') beabstandet werden.

5. Vorrichtung zur Herstellung eines Verbindungselementes (100') aus einem Verbindungselementhalbzeug (102), insbesondere eines axialbeweglich in einer Werkzeugaufnahme eines Bohrhammers befestigten Einsteckendes als Teil eines Bohrers oder Meißels aus Metall, umfassend:
- mindestens ein, zumindest radial beweglicher und in Aussparungen (208) einer Matrize (202) angeordneter, Umformkörper (206), mittels welchem die mindestens eine Verriegelungssenke (122, 124) durch Einprägen in dem Verbindungselementhalbzeug (102) formbar ist,
**dadurch gekennzeichnet, dass** die Matrize (202) dazu konfiguriert ist, durch ein axiales Einführen des Verbindungselementhalbzeugs (102) unter Kraft in Richtung der Längsachse (136) des Verbindungselementhalbzeugs (102) in eine Matrizenlängsöffnung (204) der Matrize (202), mindestens einer Drehmitnahmefläche (162, 164) in das Verbindungselementhalbzeug (102) einzuformen.

6. Vorrichtung nach Anspruch 5,
**dadurch gekennzeichnet, dass** außerhalb der Matrize (202) und annähernd rechtwinklig zu der Matrizenlängsöffnung (204) mindestens ein Keil angeordnet ist, der zum Einpressen der Verriegelungssenken (122, 124) und/oder der Drehmitnahmeflächen (162, 164) in das Verbindungselementhalbzeug (102) auf den mindestens einen radial beweglichen Umformkörper (206) drückt.

7. Vorrichtung nach Anspruch 6,
**dadurch gekennzeichnet, dass** der mindestens eine Keil als Innennockenfläche in einer konzentrisch zur Matrize drehbar gelagerten Hülse angearbeitet ist und durch Verdrehung der Hülse die Kraft zum Einformen der Verriegelungssenken (122, 124) und/oder Drehmitnahmeflächen (162, 164) auf den mindestens einen radial beweglichen Umformkörper (206) aufgebracht wird.

## Claims

1. Method for producing a rod-shaped or tubular connecting element (100'), provided with an end surface (106), from a connecting element semifinished product (102) made of metal, in particular for producing a plug-in end of a drill bit or chisel, said plug-in end being fastened in an axially movable manner in a tool receptacle of a hammer drill, wherein a connecting element semifinished product (102) is made available, wherein at least one rotary entrainment surface (162, 164) is formed into the connecting element semifinished product (102) by axially inserting the connecting element semifinished product (102) under force in the direction of the longitudinal axis (136) of the connecting element semifinished product (102) into a die longitudinal opening (204) of a die (202), and at least one locking depression (122, 124) is stamped into the connecting element semifinished product (102) by radially feeding in at least one forming body (206) which is movable in the same die (202).

2. Method according to Claim 1,
**characterized in that** the stamping-in of the at least one locking depression (122, 124) by radially feeding in at least one forming body (206) which is movable in the die (202) occurs subsequently to the forming-in, and/or during the forming-in, of the at least one rotary entrainment surface (162, 164).

3. Method according to either of the preceding claims, **characterized in that**, in the case of a tubular connecting element semifinished product (102) having a tubular inner cavity with a tubular inner cross section, in the region of the at least one planned rotary entrainment surface (162, 164) and of the at least one planned locking depression (122, 124), the tubular inner cross section is diminished or closed by the incorporation of the rotary entrainment surface (162, 164) and/or of the locking depression (122, 124), with preferably the tubular inner cross section being reduced or closed by preinserting into the connecting element semifinished product (102) an inner pin profiled along its longitudinal axis (136) with changes in cross section, wherein the inner pin preferably has a greater strength than the connecting element semifinished product (102) .

4. Method according to one of the preceding claims, **characterized in that** the die (202) is divided at least once in the longitudinal direction, and the die halves or parts, upon ejection, are slightly spaced apart in relation to a diameter of the connecting element (100').

5. Device for producing a connecting element (100') from a connecting element semifinished product (102), in particular for producing a plug-in end as part of a drill bit or chisel made of metal, said plug-in end being fastened in an axially movable manner in a tool receptacle of a hammer drill, comprising:
- at least one forming body (206), which is at least radially movable and arranged in cutouts (208) of a die (202) and by means of which the at least one locking depression (122, 124) can be formed by stamping in the connecting element semifinished product (102),
**characterized in that** the die (202) is configured to form at least one rotary entrainment surface (162, 164) into the connecting element semifinished product (102) by axially inserting the connecting element semifinished product (102) under force in the direction of the longitudinal axis (136) of the connecting element semifinished product (102) into a die longitudinal opening (204) of the die (202).

6. Device according to Claim 5,
**characterized in that** outside of the die (202) and approximately at a right angle to the die longitudinal opening (204) there is arranged at least one wedge which, in order to press the locking depressions (122, 124) and/or the rotary entrainment surfaces (162, 164) into the connecting element semifinished product (102), presses onto the at least one radially movable forming body (206) .

7. Device according to Claim 6,
**characterized in that** the at least one wedge is incorporated as an inner cam surface in a sleeve mounted so as to be rotatable concentrically to the die, and rotating the sleeve causes the force for forming in the locking depressions (122, 124) and/or rotary entrainment surfaces (162, 164) to be applied to the at least one radially movable forming body (206).

## Revendications

1. Procédé de fabrication d'un élément de raccordement (100') en forme de tige ou de tube pourvu d'une surface terminale (106) en un demi-produit d'élément de raccordement (102) en métal, en particulier d'une extrémité d'enfichage fixée de manière axialement mobile dans un logement d'outil d'un marteau perforateur d'un foret ou burin,
dans lequel un demi-produit d'élément de raccordement (102) est mis à la disposition,
dans lequel au moins une surface d'entraînement rotatif (162, 164) est formée par une introduction axiale du demi-produit d'élément de raccordement (102) à force en direction de l'axe longitudinal (136) du demi-produit d'élément de raccordement (102) dans une ouverture longitudinale de matrice (204) d'une matrice (202) dans le demi-produit d'élément de raccordement (102), et au moins un creux de verrouillage (122, 124) est estampé par avance radiale d'au moins un corps de formage (206) mobile dans la même matrice (202) dans le demi-produit d'élément de raccordement (102).

2. Procédé selon la revendication 1,
**caractérisé en ce que** l'estampage d'au moins un creux de verrouillage (122, 124) est effectué par avance radiale d'au moins un corps de formage (206) mobile dans la matrice (202) suite à la formation et/ou pendant la formation d'au moins une surface d'entraînement rotatif (162, 164).

3. Procédé selon l'une des revendications précédentes,
**caractérisé en ce que** pour un demi-produit d'élément de raccordement (102) tubulaire présentant un espace creux intérieur de tube avec une section transversale intérieure de tube dans la zone d'au moins une surface d'entraînement rotatif (162, 164) planifiée et d'au moins un creux de verrouillage (122, 124) planifié la section transversale intérieure de tube est réduite ou fermée par l'introduction de la surface d'entraînement rotatif (162, 164) et/ou du creux de verrouillage (122, 124), de préférence la section transversale intérieure de tube est réduite ou fermée par introduction précédente d'une tige intérieure profilée le long de son axe longitudinal (136) avec des modifications de section transversale dans le demi-produit d'élément de raccordement (102), dans lequel la tige intérieure présente de préférence une résistance supérieure à celle du demi-produit d'élément de raccordement (102).

4. Procédé selon l'une des revendications précédentes,
**caractérisé en ce que** la matrice (202) est divisée dans le sens longitudinal au moins une fois et les moitiés ou parties de matrice lors du rejet sont espacées légèrement par rapport à un diamètre de l'élément de raccordement (100').

5. Dispositif de fabrication d'un élément de raccordement (100') à partir d'un demi-produit d'élément de raccordement (102), en particulier d'une extrémité d'enfichage fixée de manière axialement mobile dans un logement d'outil d'un marteau perforateur comme partie d'un foret ou burin en métal, comprenant :
- au moins un corps de formage (206) mobile au moins radialement et agencé dans des évidements (208) d'une matrice (202), au moyen duquel l'au moins un creux de verrouillage (122, 124) est formable par estampage dans le demi-produit d'élément de raccordement (102),
**caractérisé en ce que** la matrice (202) est configurée afin de prendre forme par une introduction axiale du demi-produit d'élément de raccordement (102) à force en direction de l'axe longitudinal (136) du demi-produit d'élément de raccordement (102) dans une ouverture longitudinale de matrice (204) de la matrice (202), au moins d'une surface d'entraînement rotatif (162, 164) dans le demi-produit d'élément de raccordement (102).

6. Dispositif selon la revendication 5,
**caractérisé en ce qu'**au moins un coin est agencé en dehors de la matrice (202) et approximativement à angle droit à l'ouverture longitudinale de matrice (204) qui presse pour l'enfoncement des creux de verrouillage (122, 124) et/ou des surfaces d'entraînement rotatif (162, 164) dans le demi-produit d'élément de raccordement (102) sur l'au moins un corps de formage (206) radialement mobile.

7. Dispositif selon la revendication 6,
**caractérisé en ce que** l'au moins un coin est usiné comme surface de came intérieure dans une douille logée de manière rotative concentriquement à la matrice et par rotation de la douille la force est appliquée pour la formation des creux de verrouillage (122, 124) et/ou des surfaces d'entraînement rotatif (162, 164) sur l'au moins un corps de formage (206) radialement mobile.
